# EUROPÄISCHE PATENTSCHRIFT

(11) **EP 0 506 699 B1**
(45) Veröffentlichungstag und Bekanntmachung des Hinweises auf die Patenterteilung: **02.03.1994**
(21) Anmeldenummer: 91900230.3
(22) Anmeldetag: 07.12.1990
(51) Int. Cl.: G11B 7/135, G11B 7/09

(54) **OPTISCHE ABTASTVORRICHTUNG**
OPTICAL SCANNING DEVICE
DISPOSITIF DE BALAYAGE OPTIQUE

(30) Priorität: 23.12.1989 DE 3942943
(43) Veröffentlichungstag der Anmeldung: 07.10.1992
(73) Patentinhaber: Deutsche Thomson-Brandt GmbH, 78003 Villingen-Schwenningen (DE)
(72) Erfinder: MORIMOTO, Yasuaki, Chiba-ken (JP); WEISSMANN, Gerhard, D-7730 Villingen-Schwenningen (DE)
(74) Vertreter: Einsel, Robert, Dipl.-Ing.
(86) Internationale Anmeldenummer: EP9002117
(87) Internationale Veröffentlichungsnummer: WO9110232

(56) Entgegenhaltungen:
- EP-A- 0 198 655
- EP-A- 0 238 224

## Beschreibung

Die Erfindung betrifft eine optische Abtastvorrichtung, bei der ein von einer Lichtquelle erzeugter Lichtstrahl mittels eines halbdurchlässigen Spiegels auf einen Aufzeichnungsträger gelenkt wird und vom Aufzeichnungsträger den halbdurchlässigen Spiegel durchstrahlend auf einen Photodetektor reflektiert wird, wobei im Strahlengang des vom Aufzeichnungsträger reflektierten Lichtstrahls zwischen dem halbdurchlässigen Spiegel und dem Photodetektor eine lichtdurchlässige Platte rechtwinklig zum halbdurchlässigen Spiegel angeordnet ist.

Eine derartige Abtastvorrichtung wird z.B. in einem CD-Spieler eingesetzt, um den Aufzeichnungsträger, die sogenannte Compact-Disc, abzutasten.

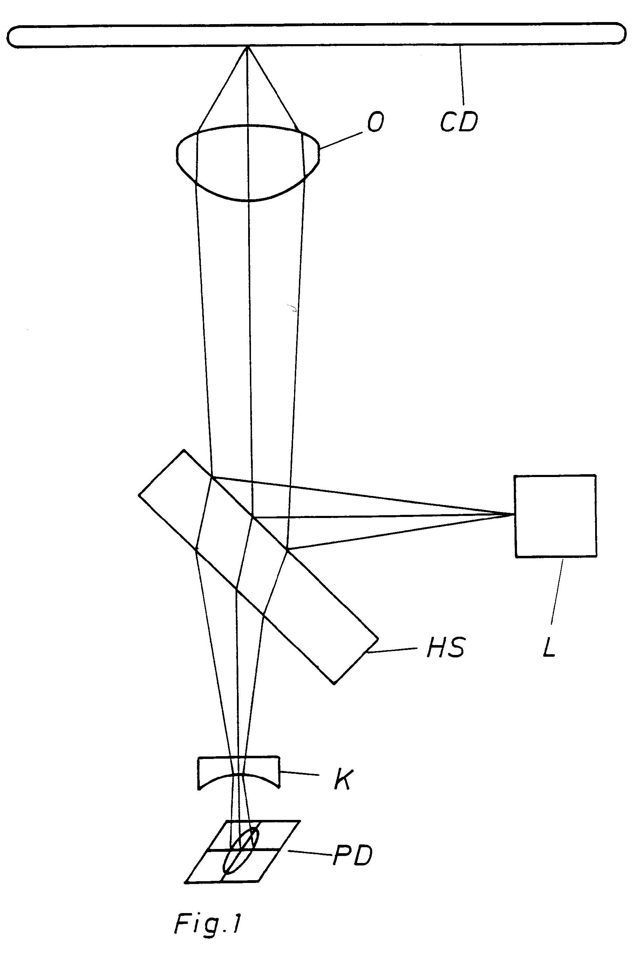

In Figur 1 ist der Aufbau einer bekannten Abtastvorrichtung abgebildet, die beispielsweise nach dem Einstrahl- oder dem Dreistrahlverfahren arbeitet.

Der Lichtstrahl eines Lasers L wird von einem halbdurchlässigen Spielgel HS rechtwinklig auf die Compact Disc CD abgelenkt und mittels einer Objektivlinse 0 auf die Platte CD fokussiert. Von der Platte CD wird der Lichtstrahl durch die Objektivlinse hindurch zurück zum halbdurchlässigen Spiegel HS reflektiert, den er durchstrahlt, um eine Konvexlinse K, z.B. eine Plankonvexlinse, durchstrahlend auf einen Vierquadrantenphotodetektor PD zu treffen. Der Vierquadrantenphotodetektor PD ist im Fokus angeordnet.

Weil aber zur Erzeugung des Datensignals und des Fokusfehlersignals ein kreisförmiger Lichtfleck auf dem Vierquadrantenphotodetektor erforderlich ist, liegt zwischen dem halbdurchlässigen Spiegel HS und dem Vierquadrantenphotodetektor PD die Konvexlinse K, die den Lichtstrahl verbreitert. Im Fokus bildet sich daher anstelle eines Lichtpunktes ein kreisförmiger Lichtfleck auf dem Vierquadrantenphotodetektor PD ab.

Ein wesentlicher Nachteil dieser optischen Abtastvorrichtung ist durch die Konvexlinse bedingt, denn es handelt sich bei der Konvexlinse um ein teures optisches Bauteil, dessen genaue Justierung, die unbedingt erforderlich ist, relativ schwierig ist.

Ein weiterer Nachteil liegt darin, daß durch den halbdurchlässigen Spiegel HS ein Strahlenversatz verursacht wird.

Aus der EP-A-0 198 655 ist eine weitere optische Abtastvorrichtung bekannt, bei der ein von einer Lichtquelle erzeugter Lichtstrahl mittels eines halbdurchlässigen Spiegels auf einen Aufzeichnungsträger gelenkt wird. Vom Aufzeichnungsträger wird der Lichtstrahl den halbdurchlässigen Spiegel durchstrahlend auf einen Photodetektor reflektiert. Im Strahlengang des vom Aufzeichnungsträger reflektierten Lichtstrahls ist zwischen dem halbdurchlässigen Spiegel und dem Photodetektor eine lichtdurchlässige Platte rechtwinklig zum halbdurchlässigen Spiegel angeordnet.

Ein Nachteil dieser optischen Abtastvorrichtung ist darin zu sehen, daß sowohl der halbdurchlässige Spiegel als auch die lichtdurchlässige Platte genau im Strahlengang zu justieren sind, um eine sichere Abtastung der Daten zu erzielen.

Es ist daher Aufgabe der Erfindung, bei einer optischen Abtastvorrichtung gemäß Oberbegriff des Anspruchs 1 die Verbreiterung des Lichtstrahls mit möglichst einfachen Mitteln zu erzielen und gleichzeitig die Justierarbeiten für die optischen Bauteile zu vereinfachen.

Die Erfindung löst diese Aufgabe dadurch, daß der halbdurchlässige Spiegel und die Platte als ein Teil gefertigt sind oder daß der halbdurchlässige Spiegel und die Platte aneinander befestigt sind.

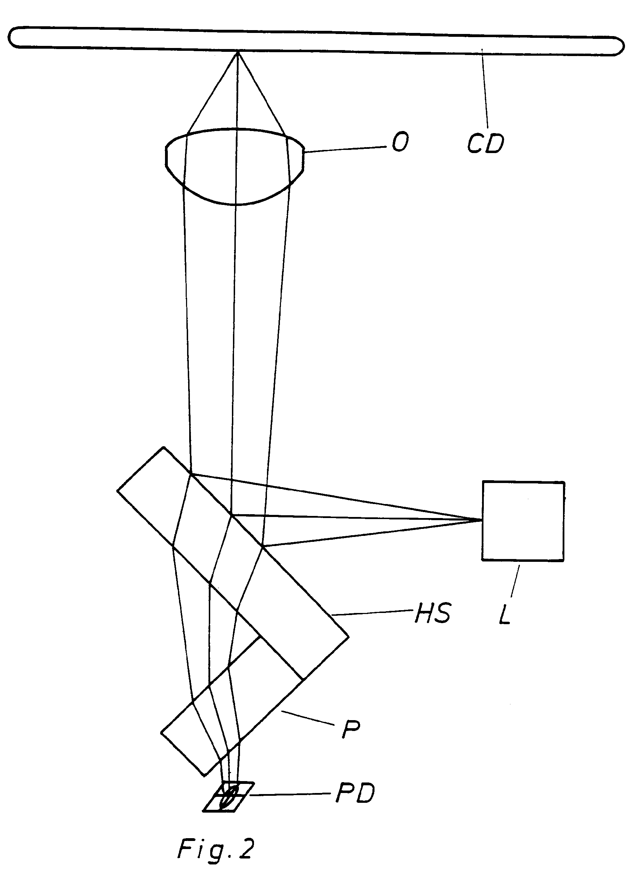

An Hand des in Figur 2 gezeigten Ausführungsbeispieles wird die Erfindung zuerst beschrieben und anschließend erläutert.

Wie bei der bekannten optischen Abtastvorrichtung strahlt der von einem Laser L erzeugte Lichtstrahl auf einen halbdurchlässigen Spiegel HS, der den Lichtstrahl rechtwinklig auf die Compact-Disc CD ablenkt. Mittels einer zwischen dem halbdurchlässigen Spiegel HS und der Platte CD liegenden Objektivlinse 0 wird der Lichtstrahl auf die Platte CD fokussiert, von wo er zurück zum halbdurchlässigen Spiegel HS reflektiert wird. Rechtwinklig zum halbdurchlässigen Spiegel HS ist eine Glasplatte P an einer Stirnseite des halbdurchlässigen Spiegels z.B. mittels Klebstoff befestigt. Der von der Platte CD reflektierte Lichtstrahl strahlt durch die Objektivlinse 0, durch den halbdurchlässigen Spiegel HS und durch die Glasplatte P zum Vierquadrantenphotodetektor PD.

Die Glasplatte P, die im rechten Winkel zum halbdurchlässigen Spiegel HS angeordnet ist, bewirkt wie eine Konvexlinse eine Verbreiterung des Lichtstrahls. Jedoch ist die gemäß der Erfindung vorgesehene Glasplatte wesentlich billiger als die beim Stand der Technik vorgesehene Konvexlinse.

Ein weiterer Vorteil wird erzielt, wenn entweder die Glasplatte P an einer Stirnseite des halbdurchlässigen Spiegels HS oder der halbdurchlässige Spiegel HS an einer Stirnseite der Glasplatte P befestigt ist. Bei diesem Ausführungsbeispiel der Erfindung braucht nur ein Teil - die Anordnung aus dem halbdurchlässigen Spiegel HS und der Glasplatte P - justiert zu werden, während im Gegensatz dazu beim Stand der Technik sowohl der halbdurchlässige Spiegel HS als auch die Konvexlinse K genau zu justieren sind.

Wenn der halbdurchlässige Spiegel HS und die Glasplatte die gleichen optischen Eigenschaften haben, wird außerdem der lästige Strahlenversatz vermieden. Anstelle von Glas kann auch Kunststoff für die Platte P verwendet werden.

Bei dem in Figur 2 gezeigten bevorzugten Ausführungsbeispiel ist der halbdurchlässige Spiegel HS an die Stirnseite der Glasplatte P oder die Glasplatte P an die Stirnseite des halbdurchlässigen Spiegels HS geklebt.

Die Erfindung ist z.B. für optische Abtastvorrichtungen geeignet, die nach dem Einstrahl- oder Dreistrahlverfahren mittels eines Lichtstrahls die Daten eines Aufzeichnungsträgers abtasten. Derartige Abtastvorrichtungen sind beispielsweise in CD-Spielern, Videoplattenspielern, DRAW-Disc-Spielern oder magneto-optischen Aufzeichnungs- und Wiedergabegeräten eingebaut.

## Patentansprüche

1. Optische Abtastvorrichtung, bei der ein von einer Lichtquelle (L) erzeugter Lichtstrahl mittels eines halbdurchlässigen Spiegels (HS) auf einen Aufzeichnungsträger (CD) gelenkt wird und vom Aufzeichnungsträger (CD) den halbdurchlässigen Spiegel (HS) durchstrahlend auf einen Photodetektor (PD) reflektiert wird, wobei im Strahlengang des vom Aufzeichnungsträger (CD) reflektierten Lichtstrahls zwischen dem halbdurchlässigen Spiegel (HS) und dem Photodetektor (PD) eine Lichtdurchlässige Platte (P) rechtwinklig zum halbdurchlässigen Spiegel (HS) angeordnet ist, **dadurch gekennzeichnet**, daß der halbdurchlässige Spiegel (HS) und die Platte (P) als ein Teil gefertigt sind oder daß der halbdurchlässige Spiegel (HS) und die Platte (P) aneinander befestigt sind.

2. Optische Abtastvorrichtung nach Anspruch 1, **dadurch** **gekennzeichnet**, daß der halbdurchlässige Spiegel (HS) und die Platte (P) aus dem gleichen Material gefertigt sind.

3. Optische Abtastvorrichtung nach Anspruch 1 oder 2, **dadurch gekennzeichnet**, daß der halbdurchlässige Spiegel (HS) an einer Stirnseite der Platte (P) oder die Platte (P) an einer Stirnseite des halbdurchlässigen Spiegels (HS) befestigt ist.

4. Optische Abtastvorrichtung nach Anspruch 1, 2 oder 3, **da****durch gekennzeichnet**, daß der halbdurchlässige Spiegel (HS) und die Platte (P) miteinander verklebt sind.

5. Optische Abtastvorrichtung nach einem oder mehreren der vorangehenden Ansprüche, **dadurch gekennzeichnet**, daß die Platte (P) aus Glas oder Kunststoff gefertigt ist.

6. Optische Abtastvorrichtung nach einem oder mehreren der vorangehenden Ansprüche, **dadurch gekennzeichnet**, daß der halbdurchlässige Spiegel (HS) und die PLatte (P) gleich dick sind.

7. Optische Abtastvorrichtung nach einem oder mehreren der vorangehenden Ansprüche, **dadurch gekennzeichnet**, daß der halbdurchlässige Spiegel (HS) und die Platte (P) aus Material gleicher optischer Eigenschaften gefertigt sind.

8. Optische Abtastvorrichtung nach einem oder mehreren der vorangehenden Ansprüche, **dadurch gekennzeichnet**, daß als Photodetektor ein Vierquadrantenphotodetektor (PD) vorgesehen ist, der im Fokus Liegt.

## Claims

1. Optical scanning device, in which a light beam produced by a light source (L) is directed by means of a semitransparent mirror (HS) onto a recording medium (CD) and reflected by the recording medium (CD) onto a photodetector (PD), being transmitted through the semitransparent mirror (HS), a transparent plate (P) being arranged in the path of the light beam which is reflected by the recording medium (CD) between the semitransparent mirror (HS) and the photodetector (PD) and at a right angle to the semitransparent mirror (HS), characterised in that the semitransparent mirror (HS) and the plate (P) are produced as one part or that the semitransparent mirror (HS) and the plate (P) are secured to one another.

2. Optical scanning device according to claim 1, characterised in that the semitransparent mirror (HS) and the plate (P) are produced from the same material.

3. Optical scanning device according to claim 1 or 2, characterised in that the semitransparent mirror (HS) is secured to a front face of the plate (P) or the plate (P) is secured to a front face of the semitransparent mirror (HS).

4. Optical scanning device according to claim 1, 2 or 3, characterised in that the semitransparent mirror (HS) and the plate (P) are secured to one another by adhesive.

5. Optical scanning device according to one or more of the preceding claims, characterised in that the plate (P) is produced from glass or plastic.

6. Optical scanning device according to one or more of the preceding claims, characterised in that the semitransparent mirror (HS) and the plate (P) are of the same thickness.

7. Optical scanning device according to one or more of the preceding claims, characterised in that the semitransparent mirror (HS) and the plate (P) are produced from material having the same optical properties.

8. Optical scanning device according to one or more of the preceding claims, characterised in that the photodetector which is provided is a four-quadrant photodetector (PD), which lies at the focal point.

## Revendications

1. Dispositif de balayage optique dans lequel un faisceau lumineux, produit par une source de lumière (L), est dévié sur un support d'enregistrement (CD) au moyen d'un miroir semi-perméable (HS) et est réfléchi par le support d'enregistrement (CD) sur un détecteur photoélectrique (PD) en traversant le miroir semi-perméable (HS), un disque perméable à la lumière (P) étant placé dans la marche des rayons du faisceau lumineux réfléchi par le support d'enregistrement (CD) entre le miroir semi-perméable (HS) et le détecteur photoélectrique (PD) à angles droits avec le miroir semi-perméable (HS), **caractérisé en ce** que le miroir semi-perméable (HS) et le disque (P) sont fabriqués comme étant une partie ou que le miroir semi-perméable (HS) et le disque (P) sont fixés l'un à l'autre.

2. Dispositif de balayage optique selon la revendication 1, **caractérisé en ce** que le miroir semi-perméable (HS) et le disque (P) sont fabriqués en la même matière.

3. Dispositif de balayage optique selon la revendication 1 ou 2, **caractérisé en ce** que le miroir semi-perméable (HS) est fixé à une face frontale du disque (P) ou le disque (P) à une face frontale du miroir semi-perméable (HS).

4. Dispositif de balayage optique selon la revendication 1, 2 ou 3, **caractérisé en ce** que le miroir semi-perméable (HS) et le disque (P) sont collés l'un à l'autre.

5. Dispositif de balayage optique selon l'une ou plusieurs des revendications précédentes, **caractérisé en ce** que le disque (P) est fabriqué en verre ou en matière synthétique.

6. Dispositif de balayage optique selon l'une ou plusieurs des revendications précédentes, **caractérisé en ce** que le miroir semi-perméable (HS) et le disque (P) sont de même épaisseur.

7. Dispositif de balayage optique selon l'une ou plusieurs des revendications précédentes,**caractérisé en ce** que le miroir semi-perméable (HS) et le disque (P) sont fabriqués en une matière aux mêmes propriétés optiques.

8. Dispositif de balayage optique selon l'une ou plusieurs des revendications précédentes, **caractérisé en ce** qu'un détecteur photoélectrique à quatre quadrants (PD), qui se situe dans le foyer, est prévu comme détecteur photoélectrique.
